# EUROPEAN PATENT APPLICATION

(11) **EP 4 694 343 A1**
(43) Date of publication of application: **11.02.2026**
(21) Application number: 25192691.1
(22) Date of filing: 30.07.2025
(51) Int. Cl.: H04W 36/00, H04W 24/10, H04W 36/30, H04W 72/02, H04W 72/0446, H04W 72/54

(54) **BEST EFFORT RADIO RESOURCE MANAGEMENT MEASUREMENTS**

(30) Priority: 09.08.2024 GB 202411784
(71) Applicant: Nokia Technologies Oy, 02610 Espoo (FI)
(72) Inventor: CAUDURO DIAS DE PAIVA, Rafael, Aalborg (DK); HOFMANN, Jürgen, Merching (DE); DALSGAARD, Lars, Oulu (FI); PARIS, Stefano, Vanves (FR); SONG, Jian, Palaiseau (FR)
(74) Representative: Nokia EPO representatives

(57) **Abstract**

Example embodiments of the present disclosure are directed to best effort radio resource management (RRM) measurements. A method comprises performing RRM measurements for intra-frequency carrier and a serving cell carrier of the apparatus and at least one inter-frequency carriers; and in accordance with a determination that an increase of an amount of traffic with a data type having a specific latency requirement, or an increase of a packet loss rate associated with the traffic satisfies a respective threshold level, skip the RRM measurements for the at least one inter-frequency carriers on one or more measurement gaps; and performing transmission of the traffic between the apparatus and a second apparatus within the one or more measurement gaps.

## Description

### FIELD

Various example embodiments of the present disclosure generally relate to the field of telecommunication and in particular, to methods, devices, apparatuses and computer readable storage medium for to best effort radio resource management (RRM) measurements.

### BACKGROUND

UE measurements are necessary in order to ensure robust mobility. For some traffics with a specific type, such as Extended Reality (XR) traffic, which may require extremely low latency, an interruption of the traffic transmission is not expected.

### SUMMARY

In a first aspect of the present disclosure, there is provided a first apparatus. The first apparatus comprises at least one processor; and at least one memory storing instructions that, when executed by the at least one processor, cause the first apparatus at least to: receive, from a second apparatus, a best effort RRM measurement configuration at least indicating a prioritization of inter-frequency measurements is to be autonomously performed by the first apparatus; perform, based on the best effort RRM measurement configuration, the prioritization of inter-frequency measurements based on received signal qualities associated with a plurality of inter-frequency carriers; and skip, based on the prioritization, at least some inter-frequency measurements within a pre-determined time interval during a transmission scheduling for traffic with a data type having a specific latency requirement.

In a second aspect of the present disclosure, there is provided a second apparatus. The second apparatus comprises at least one processor; and at least one memory storing instructions that, when executed by the at least one processor, cause the second apparatus at least to: transmit, to a first apparatus, a best effort RRM measurement configuration at least indicating a prioritization of inter-frequency measurements is to be autonomously performed by the first apparatus; and schedule a transmission of traffic with a data type having a specific latency requirement between the first apparatus and the second apparatus based on the best effort RRM measurement configuration within a pre-determined time interval.

In a third aspect of the present disclosure, there is provided a method. The method comprises: receiving, from a second apparatus, a best effort RRM measurement configuration at least indicating a prioritization of inter-frequency measurements is to be autonomously performed by the first apparatus; performing, based on the best effort RRM measurement configuration, the prioritization of inter-frequency measurements based on received signal qualities associated with a plurality of inter-frequency carriers; and skipping, based on the prioritization, at least some inter-frequency measurements within a pre-determined time interval during a transmission scheduling for traffic with a data type having a specific latency requirement.

In a fourth aspect of the present disclosure, there is provided a method. The method comprises: transmitting, to a first apparatus, a best effort RRM measurement configuration at least indicating a prioritization of inter-frequency measurements is to be autonomously performed by the first apparatus; and scheduling a transmission of traffic with a data type having a specific latency requirement between the first apparatus and the second apparatus based on the best effort RRM measurement configuration within a pre-determined time interval.

In a fifth aspect of the present disclosure, there is provided a first apparatus. The first apparatus comprises means for receiving, from a second apparatus, a best effort RRM measurement configuration at least indicating a prioritization of inter-frequency measurements is to be autonomously performed by the first apparatus; means for performing, based on the best effort RRM measurement configuration, the prioritization of inter-frequency measurements based on received signal qualities associated with a plurality of inter-frequency carriers; and means for skipping, based on the prioritization, at least some inter-frequency measurements within a pre-determined time interval during a transmission scheduling for traffic with a data type having a specific latency requirement.

In a sixth aspect of the present disclosure, there is provided a second apparatus. The second apparatus comprises means for transmitting, to a first apparatus, a best effort RRM measurement configuration at least indicating a prioritization of inter-frequency measurements is to be autonomously performed by the first apparatus; and means for scheduling a transmission of traffic with a data type having a specific latency requirement between the first apparatus and the second apparatus based on the best effort RRM measurement configuration within a pre-determined time interval.

In a seventh aspect of the present disclosure, there is provided a computer readable medium. The computer readable medium comprises instructions stored thereon for causing an apparatus to perform at least the method according to the third aspect.

In an eighth aspect of the present disclosure, there is provided a computer readable medium. The computer readable medium comprises instructions stored thereon for causing an apparatus to perform at least the method according to the fourth aspect.

In a ninth aspect of the present disclosure, there is provided an apparatus. The first apparatus comprises at least one processor; and at least one memory storing instructions that, when executed by the at least one processor, cause the apparatus at least to: perform RRM measurements for the intra-frequency carrier and a serving cell carrier of the apparatus and at least one inter-frequency carriers; and in accordance with a determination that an increase of an amount of traffic with a data type having a specific latency requirement, or an increase of a packet loss rate associated with the traffic satisfies a respective threshold level, skip the RRM measurements for the at least one inter-frequency carriers on one or more measurement gaps; and perform transmission of the traffic between the apparatus and a second apparatus within the one or more measurement gaps.

In a tenth aspect of the present disclosure, there is provided a method. The method comprises: performing RRM measurements for the intra-frequency carrier and a serving cell carrier of the apparatus and at least one inter-frequency carriers; and in accordance with a determination that an increase of an amount of traffic with a data type having a specific latency requirement, or an increase of a packet loss rate associated with the traffic satisfies a respective threshold level, skip the RRM measurements for the at least one inter-frequency carriers on one or more measurement gaps; and performing transmission of the traffic between the apparatus and a second apparatus within the one or more measurement gaps.

In an eleventh aspect of the present disclosure, there is provided an apparatus. The first apparatus comprises means for performing RRM measurements for the intra-frequency carrier and a serving cell carrier of the apparatus and at least one inter-frequency carriers; and means for in accordance with a determination that an increase of an amount of traffic with a data type having a specific latency requirement, or an increase of a packet loss rate associated with the traffic satisfies a respective threshold level, skip the RRM measurements for the at least one inter-frequency carriers on one or more measurement gaps; and means for performing transmission of the traffic between the apparatus and a second apparatus within the one or more measurement gaps.

In a twelfth aspect of the present disclosure, there is provided a computer readable medium. The computer readable medium comprises instructions stored thereon for causing an apparatus to perform at least the method according to the tenth aspect.

It is to be understood that the Summary section is not intended to identify key or essential features of embodiments of the present disclosure, nor is it intended to be used to limit the scope of the present disclosure. Other features of the present disclosure will become easily comprehensible through the following description.

### BRIEF DESCRIPTION OF THE DRAWINGS

Some example embodiments will now be described with reference to the accompanying drawings, where:
FIG. 1 illustrates an example communication environment in which example embodiments of the present disclosure can be implemented;
FIG. 2 shows an example of measurements without gaps;
FIG. 3 illustrates a signaling chart where a UE indicates that it is capable of performing measurements without gaps with interruptions;
FIG. 4 illustrates an example of measurements in different Synchronization Signal Block (SSB) based measurement timing configuration (SMTC) windows using measurement gaps;
FIG. 5 illustrates a signaling chart for a communication in accordance with some example embodiments of the present disclosure;
FIG. 6 illustrates an example of measurement skipping in accordance with some example embodiments of the present disclosure;
FIG. 7 illustrates a flowchart of a method implemented at a first apparatus in accordance with some example embodiments of the present disclosure;
FIG. 8 illustrates a flowchart of a method implemented at a second apparatus in accordance with some example embodiments of the present disclosure;
FIG. 9 illustrates a flowchart of a method implemented at an apparatus in accordance with some example embodiments of the present disclosure;
FIG. 10 illustrates a simplified block diagram of a device that is suitable for implementing example embodiments of the present disclosure; and
FIG. 11 illustrates a block diagram of an example computer readable medium in accordance with some example embodiments of the present disclosure.

Throughout the drawings, the same or similar reference numerals represent the same or similar element.

### DETAILED DESCRIPTION

Principle of the present disclosure will now be described with reference to some example embodiments. It is to be understood that these embodiments are described only for the purpose of illustration and help those skilled in the art to understand and implement the present disclosure, without suggesting any limitation as to the scope of the disclosure. Embodiments described herein can be implemented in various manners other than the ones described below.

In the following description and claims, unless defined otherwise, all technical and scientific terms used herein have the same meaning as commonly understood by one of ordinary skills in the art to which this disclosure belongs.

References in the present disclosure to "one embodiment," "an embodiment," "an example embodiment," and the like indicate that the embodiment described may include a particular feature, structure, or characteristic, but it is not necessary that every embodiment includes the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

It shall be understood that although the terms "first," "second,"..., etc. in front of noun(s) and the like may be used herein to describe various elements, these elements should not be limited by these terms. These terms are only used to distinguish one element from another and they do not limit the order of the noun(s). For example, a first element could be termed a second element, and similarly, a second element could be termed a first element, without departing from the scope of example embodiments. As used herein, the term "and/or" includes any and all combinations of one or more of the listed terms.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

As used herein, unless stated explicitly, performing a step "in response to A" does not indicate that the step is performed immediately after "A" occurs and one or more intervening steps may be included.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components etc., but do not preclude the presence or addition of one or more other features, elements, components and/ or combinations thereof.

As used in this application, the term "circuitry" may refer to one or more or all of the following:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause a first apparatus, such as a mobile phone or server, to perform various functions) and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

As used herein, the term "communication network" refers to a network following any suitable communication standards, such as New Radio (NR), Long Term Evolution (LTE), LTE-Advanced (LTE-A), Wideband Code Division Multiple Access (WCDMA), High-Speed Packet Access (HSPA), Narrow Band Internet of Things (NB-IoT) and so on. Furthermore, the communications between a terminal device and a network device in the communication network may be performed according to any suitable generation communication protocols, including, but not limited to, the first generation (1G), the second generation (2G), 2.5G, 2.75G, the third generation (3G), the fourth generation (4G), 4.5G, the fifth generation (5G), 5.5G, the sixth generation (6G) communication protocols, and/or any other protocols either currently known or to be developed in the future. Embodiments of the present disclosure may be applied in various communication systems. Given the rapid development in communications, there will of course also be future type communication technologies and systems with which the present disclosure may be embodied. It should not be seen as limiting the scope of the present disclosure to only the aforementioned system.

As used herein, the term "network device" refers to a node in a communication network via which a terminal device accesses the network and receives services therefrom. The network device may refer to a base station (BS) or an access point (AP), for example, a node B (NodeB or NB), an evolved NodeB (eNodeB or eNB), an NR NB (also referred to as a gNB), a Remote Radio Unit (RRU), a radio header (RH), a remote radio head (RRH), a relay, an Integrated Access and Backhaul (IAB) node, a low power node such as a femto, a pico, a non-terrestrial network (NTN) or non-ground network device such as a satellite network device, a low earth orbit (LEO) satellite and a geosynchronous earth orbit (GEO) satellite, an aircraft network device, and so forth, depending on the applied terminology and technology. In some example embodiments, radio access network (RAN) split architecture comprises a Centralized Unit (CU) and a Distributed Unit (DU) at an IAB donor node. An IAB node comprises a Mobile Terminal (IAB-MT) part that behaves like a UE toward the parent node, and a DU part of an IAB node behaves like a base station toward the next-hop IAB node.

The term "terminal device" refers to any end device that may be capable of wireless communication. By way of example rather than limitation, a terminal device may also be referred to as a communication device, user equipment (UE), a Subscriber Station (SS), a Portable Subscriber Station, a Mobile Station (MS), or an Access Terminal (AT). The terminal device may include, but not limited to, a mobile phone, a cellular phone, a smart phone, voice over IP (VoIP) phones, wireless local loop phones, a tablet, a wearable terminal device, a personal digital assistant (PDA), portable computers, desktop computer, image capture terminal devices such as digital cameras, gaming terminal devices, music storage and playback appliances, vehicle-mounted wireless terminal devices, wireless endpoints, mobile stations, laptop-embedded equipment (LEE), laptop-mounted equipment (LME), USB dongles, smart devices, wireless customer-premises equipment (CPE), an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. The terminal device may also correspond to a Mobile Termination (MT) part of an IAB node (e.g., a relay node). In the following description, the terms "terminal device", "communication device", "terminal", "user equipment" and "UE" may be used interchangeably.

As used herein, the term "resource," "transmission resource," "resource block," "physical resource block" (PRB), "uplink resource," or "downlink resource" may refer to any resource for performing a communication, for example, a communication between a terminal device and a network device, such as a resource in time domain, a resource in frequency domain, a resource in space domain, a resource in code domain, or any other combination of the time, frequency, space and/or code domain resource enabling a communication, and the like. In the following, unless explicitly stated, a resource in both frequency domain and time domain will be used as an example of a transmission resource for describing some example embodiments of the present disclosure. It is noted that example embodiments of the present disclosure are equally applicable to other resources in other domains.

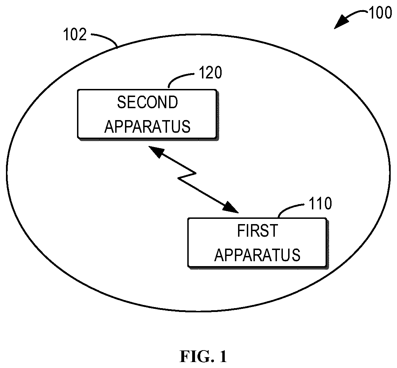

FIG. 1 illustrates an example communication environment 100 in which example embodiments of the present disclosure can be implemented. As shown in FIG. 1, the communication network 100 may comprise a first apparatus 110 which may be, for example, a terminal device. In some example embodiments, the terminal device may also be discussed as a UE.

The communication network 100 may further comprise a second apparatus 120, which may be, for example, a network device. In some example embodiments, the network device may be discussed as a BS, a gNB, or an eNB.

A serving area provided by the first apparatus 110 is called a cell. The second apparatus 120 may communicate with the first apparatus 110 within the cell 102. The cell currently serving the second apparatus 120 may be considered as a serving cell 102.

In the following, for the purpose of illustration, some example embodiments are described with the first apparatus 110 operating as a terminal device and the second apparatus 120 operating as a network device. However, in some example embodiments, operations described in connection with a terminal device may be implemented at a network device or other device, and operations described in connection with a network device may be implemented at a terminal device or other device.

In some example embodiments, if the first apparatus 110 is a terminal device and second apparatus 120 is a network device, a link from the second apparatus 120 to first apparatus 110 is referred to as a downlink (DL), while a link from the first apparatus 110 to second apparatus 120 is referred to as an uplink (UL). In DL, the second apparatus 120 is a transmitting (TX) apparatus (or a transmitter) and the first apparatus 110 is a receiving (RX) apparatus (or a receiver). In UL, the first apparatus 110 is a TX apparatus (or a transmitter) and the second apparatus 120 is a RX apparatus (or a receiver).

It is to be understood that the number of network devices and terminal devices shown in FIG. 1 is given for the purpose of illustration without suggesting any limitations. The communication environment 100 may include any suitable number of network devices and terminal devices.

Communications in the communication environment 100 may be implemented according to any proper communication protocol(s), comprising, but not limited to, cellular communication protocols of the first generation (1G), the second generation (2G), the third generation (3G), the fourth generation (4G), the fifth generation (5G), the sixth generation (6G), and the like, wireless local network communication protocols such as Institute for Electrical and Electronics Engineers (IEEE) 802.11 and the like, and/or any other protocols currently known or to be developed in the future. Moreover, the communication may utilize any proper wireless communication technology, comprising but not limited to: Code Division Multiple Access (CDMA), Frequency Division Multiple Access (FDMA), Time Division Multiple Access (TDMA), Frequency Division Duplex (FDD), Time Division Duplex (TDD), Multiple-Input Multiple-Output (MIMO), Orthogonal Frequency Division Multiple (OFDM), Discrete Fourier Transform spread OFDM (DFT-s-OFDM) and/or any other technologies currently known or to be developed in the future.

The reduction of overhead caused by measurements in 5G has been discussed. According to previous discussions, enhancements have been specified to enable the transmission/reception in gaps/restrictions that are caused by radio resource management (RRM) measurements (from inter-frequency RRM measurement gaps, or intra-frequency measurements, or other scheduling restrictions etc.). Furthermore, the corresponding measurement gap and scheduling restriction have been specified to enable the identified enhancements with the RRM performance impact taken into consideration. Furthermore, how to minimize the impact of measurement overhead on data traffic with tight latency requirements, particularly in Extended Reality (XR), has also been discussed. In addition to XR, other examples of applications requiring low latency are online gaming, videoconferencing, live streaming, autonomous vehicles, remote surgery.

In 5G NR, measurements for mobility are performed using one of the approaches in the following:
- With measurement gaps:
   ∘ Gaps cause a periodic interruption on the data transmission/reception. When data arrives shortly before a gap, or during a gap, it has to be delayed until the gap is over. This is detrimental in particular for data with low latency requirements.
- Without measurement gaps:
   ∘ Measurements without measurement gaps may cause scheduling restrictions around the symbols to be measured, which can impact the network capability to schedule data with low latency requirements.
- Without measurement gaps and with interruptions:
   ∘ This may cause the same scheduling restrictions, but random interruptions may happen as well. Interruptions are not known by the network and may cause the UE to lose downlink control information (DCIs). Losing the scheduling DCI would increase latency experienced by the user.

Some schemes for skipping measurement gaps and scheduling restrictions due to measurements are being discussed. The latest discussion comprises the alternatives for skipping measurements in the following:

**Table 1**

| | | | | |
|---|---|---|---|---|
| Proposed alternatives: | | | | |
| For solutions based on the triggering/enabling by the network signaling to enable the | | | | |
| Tx/Rx in gaps/restrictions that are caused by RRM measurements, the following alternatives and combinations of alternatives are considered: | | | | |
| | • Alternative 1: Dynamic indication to enable the Tx/Rx in particular gap(s)/restriction(s) that are caused by RRM measurements. | | | |
| | | o FFS: Alternative 1-1: Explicit indication by the DCI to skip a particular gap(s)/restriction(s); | | |
| | | | • Indication is included as part of the scheduling DCI: | |
| | | | | • FFS: Bit-field size is one bit; |
| | | | | • FFS: Bit-field size is >1 bit; |
| | | | ▪ Note: Minimum time offset(s) between the end of [the first] received dynamic indication and start of corresponding gap(s)/restriction(s) occasion that is going to be skipped shall be introduced. | |
| | | o FFS: Alternative 1-2: Explicit indication by the DCI to indicate a time window where to skip a particular gap(s)/restriction(s); | | |
| | | | ▪ Note: Minimum time offset between the end of received dynamic indication and start of the gap(s)/restriction(s) occasion in time window that is going to be skipped shall be introduced. | |
| | | o FFS: Alternative 1-3: Implicit indication by the DCI scheduling a transmission/reception overlapping with a gap(s)/restriction(s) to skip the gap(s)/restriction(s); | | |
| | | | ▪ Note: Minimum time offset between the end of received dynamic indication and start of the gap(s)/restriction(s) occasion that is going to be skipped shall be introduced. | |
| | | o FFS: DCI format, DCI content, DCI bit-field size; | | |
| | | o FFS: Whether indication is for one or more occasions; | | |
| | | o FFS: How to consider time offset between the end of received dynamic indication and start of the gap(s)/restriction(s) occasion that is going to be skipped. | | |
| | •Alternative 3: Semi-static solution to enable TX/RX in gaps/restrictions that are caused by RRM measurements. | | | |
| | | o FFS: Alternative 3-1: Configure a pattern(s) via the radio resource control to indicate occasions where to skip gaps/restrictions; | | |
| | | | ▪ FFS: Details of pattern: | |
| | | | | • FFS: Pattern is based on periodicity, offset and duration; |
| | | | | • FFS: Pattern is based on a bitmap; |
| | | | ▪ FFS: whether a pattern is applied to all or subset of configured MG configurations/scheduling restrictions. | |
| | | o FFS: Alternative 3-3: Gaps/restrictions that are caused by RRM measurements are skipped if collided with particular semi-statically pre-configured Tx/Rx occasions. | | |
| | | o FFS: Alternative 3-4: Gaps/restrictions that are caused by RRM measurements are skipped based on semi-statically configured priority information for a particular semi-statically pre-configured Tx/Rx and/or particular gaps/restrictions. | | |

In general, Alternative 1 refers to a set of options based on a dynamic indication indicating whether to skip a gap using the DCI signaling. In Alternative 3 a fixed skipping pattern is configured via the radio resource control (RRC), hence resulting in a more static solution due to the higher RRC reconfiguration time.

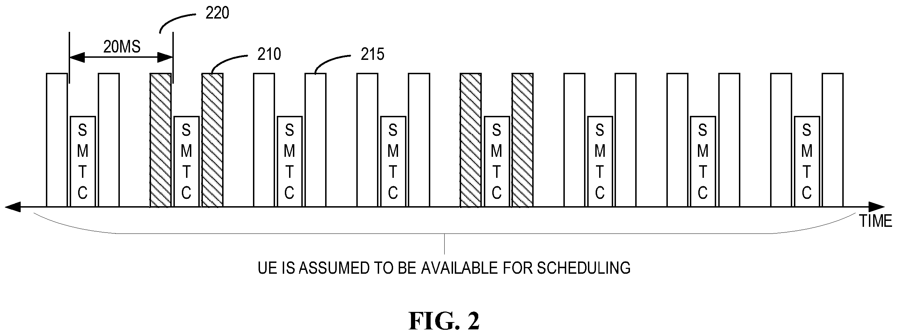

Reference is now made to FIG. 2, which shows an example of measurements without gaps. As shown in FIG. 2, the SMTC period 220 is configured for the UE. The duration of SMTC period 220 may be configurable by the network. The period of 20 milliseconds of the SMTC period 220 is merely an example, the SMTC period 220 may be longer or shorter according to actual needs.

For example, the block 210 shows an occasion where no data traffic is transmitted and/or received (scheduled to transmit and/or scheduled to receive data in some other scenarios), therefore no interruption is caused since the channel is idle. The block 215 shows an occasion where an interruption occurs.

Specifically, when the UE is trying to read the SMTC configured by the network to, for example, identify the neighbor cell, the UE may need to switch to another frequency for the SMTC occasion. However, the network may not be aware of the switching of the frequency by the UE. The switch of the frequency may cause the UE to move away from the frequency that the current serving cell 102 is using for data transmission, and as a result an interruption of data transmission is caused if there is a data transmission scheduled between the serving cell and the UE when the UE switches to another frequency for monitoring/measuring the SMTC occasion.

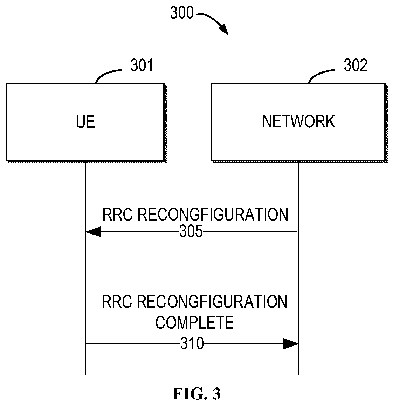

FIG. 3 shows a signaling chart 300 where a UE indicates that it is capable of performing measurements without gaps with interruptions.

As shown in FIG. 3, network 302 may send (305) a configuration message, e.g. a RRC reconfiguration message, to the UE 301 indicating a need for the measurement gap configuration. Upon receiving the RRC reconfiguration message, the UE 301 may be aware of that the network 302 will perform measurements with measurement gaps. Then the UE 301 may send (310) a RRC reconfiguration complete message to the network 302 indicating whether the UE 301 needs the measurement gaps for certain frequencies. For example, the UE 301 may indicate to the network 302 that it will perform measurements without measurement gap(s) or it will perform measurements without measurement gaps despite interruptions will be caused.

According to the information carried in the RRC reconfiguration complete message, the network 302 may take some switching occasions and/or frequencies into consideration when UE is performing the measurements. As a result, the throughput of the network may be improved.

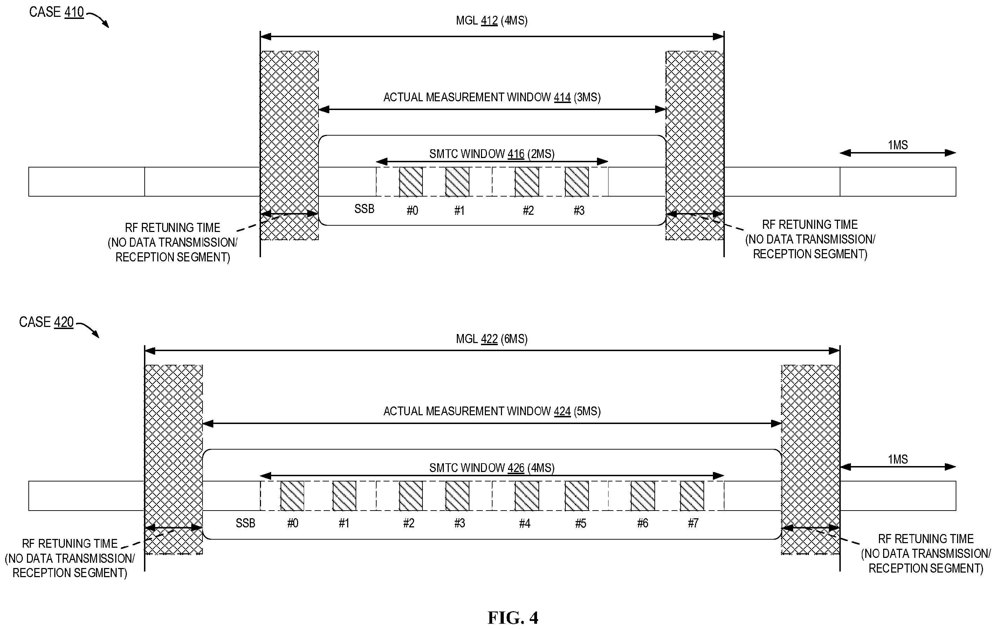

Reference is now made to FIG. 4, FIG. 4 show an example of measurements in short (i.e., 2ms in (i.e., 2ms in Case 410) and long (i.e., 4ms in Case 420) SMTC windows using measurement gaps. Depending on the application, the SMTC window length may be configured differently. Within each SMTC window, there may be one or more SSB bursts #0, #1, #2, #3, ..., #7. The UE may sense and read the SSB bursts to obtain the information regarding the identity of the cell.

When performing measurements in gaps, the UE has to tune to a measured carrier frequency (e.g., to a configured NR ARFCN) at start of the measurement gap length (MGL) and tune back to serving cell frequency at end of the MGL, hence only the outer parts of MGL will cause interruptions and thus the MGL is always longer than the actual measurement window. As shown in FIG. 4, for the case 410, the MGL 412 is 4ms, the actual measurement window 414 is 3ms, and the SMTC window 416 is 2ms. For the case 420, the MGL 422 is 6ms, the actual measurement window 424 is 5ms, and the SMTC window 426 is 4ms. It is to be understood that the lengths of the MGL, the actual measurement window and the SMTC window shown in FIG. 4 are only for the purpose of illustration. Any suitable length of MGL, actual measurement window and SMTC window may be configured.

Measurement gaps are specified with different MGL to cover short and long SMTC windows. For RRM measurements, MGL can be up to 6ms, for positioning related tasks the UE may in addition use measurement gaps with longer MGL such as 10ms or 20ms.

However, these outer parts, e.g. used for RF frequency tuning between serving carrier and measured target carrier, are not specified in duration. Also, the UE may switch, in the middle part, to another carrier frequency to measure with another SMTC window, hence interruptions may be caused also in the middle part of the MGL.

The present disclosure proposes a solution of best effort radio resource management measurements. In this solution, the UE, upon receiving the RRM measurement configuration indicating a prioritization of inter-frequency measurements is to be autonomously performed by the UE, performs, the prioritization of inter-frequency measurements based on received signal qualities associated with a plurality of inter-frequency carriers. Based on the prioritization, the UE skips at least some inter-frequency measurements within a pre-determined time interval during a transmission scheduling for traffic with a data type having a specific latency requirement. In this way, an interruption of data traffic with low latency requirements due to unnecessary measurement gap(s) can be avoided.

Example embodiments of the present disclosure will be described in detail below with reference to the accompanying drawings.

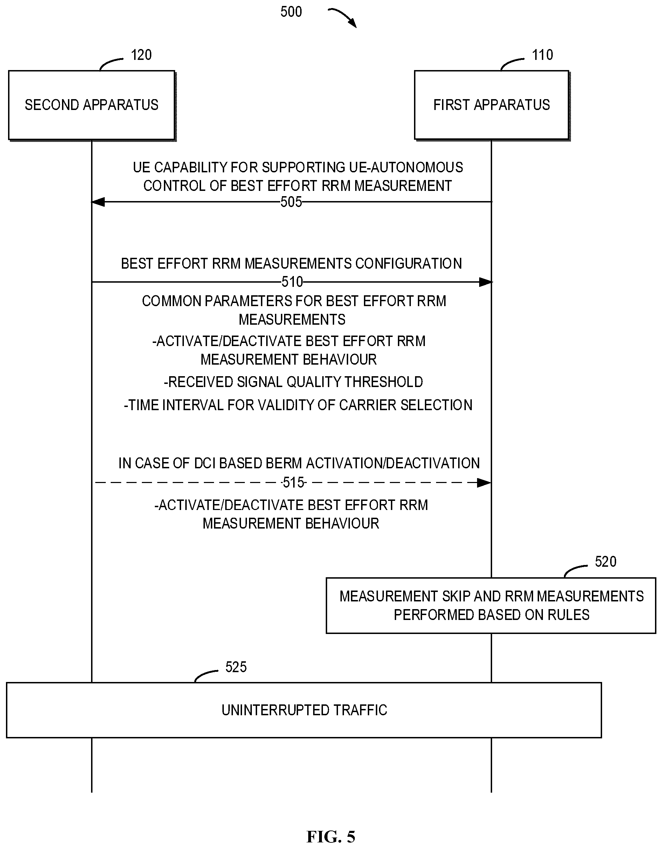

Reference is now made to FIG. 5, which shows a signaling chart 500 for communication according to some example embodiments of the present disclosure. As shown in FIG. 5, the signaling chart 500 involves a first apparatus 110 and a second apparatus 120. For the purpose of discussion, reference is made to FIG. 1 to describe the signaling chart 500.

As shown in FIG. 5, firstly the first apparatus 110 may report (505), to the second apparatus 120, a capability for supporting best effort RRM measurements for the traffic with the specific data type.

In some embodiments, the specific data type mentioned hereinafter may be a data type having a specific latency requirement, e.g., a latency lower than a threshold level, e.g., the Round-Trip Time (RTT) of the data must be lower than 10ms. For example, the data may comprise XR data or other data associated with Ultra-reliable and low-latency communication (URLLC) having a strict latency requirement.

In the process related to FIG. 5, there are two options for the first apparatus 110 to obtain the best effort RRM measurement configuration, where the Option 1 involves sending the best effort RRM measurement configuration via the radio resource control (RRC) message (refers to action 510), and whereas in Option 2, at least part of the best effort RRM measurement configuration may be sent via the downlink control information (DCI) message or a medium access control (MAC) control element (CE) message (refers to action 515), which will be further described in detail as below.

In some example embodiments, after determining that the best effort RRM measurements are supported, the second apparatus 120 transmits (510), to the first apparatus 110, a best effort RRM measurement (BERM) configuration indicating a prioritization of inter-frequency measurements is to be autonomously performed by the first apparatus 110. That is, based on the best effort RRM measurement configuration, the first apparatus 110 may try its best to perform the RRM measurements on different measurement objects (MOs) through prioritization of inter-frequency measurements.

As an option, the first apparatus 110 may receive, from the second apparatus 120, the best effort RRM measurement configuration comprising a best effort RRM measurement support flag via an RRC signaling. The best effort RRM measurement support flag may indicate whether the best effort RRM measurement is supported by the second apparatus 120.

Furthermore, the best effort RRM measurement configuration may also comprise an indication for activating/deactivating the best effort RRM measurement behavior of the first apparatus 110.

In some embodiments, the best effort RRM measurement configuration may also comprise a threshold quality for the prioritization and the pre-determined time interval associated with a validity of the prioritization.

Based on the best effort RRM measurement configuration, the first apparatus 110 may perform the prioritization of inter-frequency measurements. For example, the first apparatus 110 may measure received signal qualities associated with a plurality of inter-frequency carriers and perform the prioritization based on received signal qualities associated with a plurality of inter-frequency carriers.

Upon determining the prioritization, the first apparatus 110 may skip (520) at least some inter-frequency measurements within the pre-determined time interval during a transmission scheduling for traffic with a data type having the specific latency requirement.

In some example embodiments, if the first apparatus 110 determines that a received signal quality for respective at least one target cell on one or more inter-frequency carriers in the plurality of inter-frequency carriers satisfies a threshold quality, the first apparatus 110 may skip RRM measurements for inter-frequency carriers in the plurality of inter-frequency carriers other than the one or more inter-frequency carriers, where the respective at least one target cell satisfies the threshold quality.

Correspondingly, the first apparatus 110 may perform RRM measurements for the one or more inter-frequency carriers where the respective at least one target cell satisfies the threshold quality, for the intra-frequency carrier and for a serving cell carrier of the first apparatus within the pre-determined time interval.

In some cases, if no received signal quality for at least one target cell on an inter-frequency carrier satisfies the threshold quality, the first apparatus 110 may perform the RRM measurements only on the intra-frequency carrier and a serving cell carrier of the first apparatus.

It is to be understood that the received signal quality mentioned hereinafter may be derived from a synchronization signal reference signal received power (SS-RSRP) or a synchronization signal reference signal received quality (SS-RSRQ) or a synchronization signal signal-to-interference ratio (SS-SINR) or from a channel-state information reference symbol (CSI-RS) based measurement.

Therefore, the threshold quality mentioned above may be replaced by a combination of threshold qualities, i.e., a combination of SS-RSRP, SS-RSRQ, SS-SINR and/or CSI-RS based thresholds.

For example, the first apparatus 110 may configure a plurality of measurement objects (MOs) for measuring a plurality of target cells. Each MO is frequency dedicated. Hence, if the UE (i.e., the first apparatus 110) detects one target cell, from a plurality of detected cells on the inter-frequency carrier that has a received signal quality above the threshold quality, then this carrier is prioritized (it is not a best-effort carrier anymore). Moreover, the network (i.e., the second apparatus 120) may even signal two thresholds, e.g. one for SS-RSRP and one for SS-RSRQ.

As another option, at least a part of the best effort RRM measurement (BERM) configuration may be transmitted (515) from the second apparatus 120 to the fist apparatus 110 to at least indicate whether best effort RRM measurements are to be applied by the first apparatus 110 via DCI or MAC-CE. That is, whether the best effort RRM measurements are to be applied by the first apparatus 110 may be configured by the second apparatus 120 dynamically. If the first apparatus 110 determines, e.g., based on an indication of activating the best effort RRM measurements, that the best effort RRM measurements are to be applied by the first apparatus, the first apparatus 110 may measure the plurality of inter-frequency carriers and determine the received signal qualities associated with the plurality of inter-frequency carriers. In this option, the BERM configuration is also received via RRC message, but the indication for activation/deactivation of the BERM is sent via DCI or MAC-CE.

In some embodiments, after performing the RRM measurements on the one or more selected inter-frequency carriers, the intra-frequency carrier and the serving cell carrier of the first apparatus 110, if the first apparatus 110 determines the one or more inter-frequency carriers, the intra-frequency carrier and the serving cell carrier of the first apparatus 110 satisfy pre-determined radio condition requirements, such that e.g. a pre-defined measurement frequency in a predefined time interval is satisfied for them, the first apparatus 110 may perform further RRM measurements for other inter-frequency carriers in the plurality of inter-frequency carriers.

As described above, the best effort RRM measurement configuration indicates the pre-determined time interval associated with a validity of the prioritization. That is, if the pre-determined time interval expires, the prioritization and the selection of the one or more inter-frequency carriers for the RRM measurements are invalid. In this case, the first apparatus 110 may perform a further prioritization of inter-frequency measurements based on new measured received signal qualities associated with the plurality of inter-frequency carriers and reselect those inter-frequency carriers, where at least one target cell satisfies the threshold quality, for further RRM measurements based on the further prioritization from the plurality of inter-frequency carriers.

Then, by skipping at least some inter-frequency measurements, the first apparatus 110 may achieve (525) uninterrupted traffic with the second apparatus 120. That is, on the measurement gaps associated with skipped inter-frequency measurement(s), the traffic having latency requirement are scheduled/transmitted without interruption.

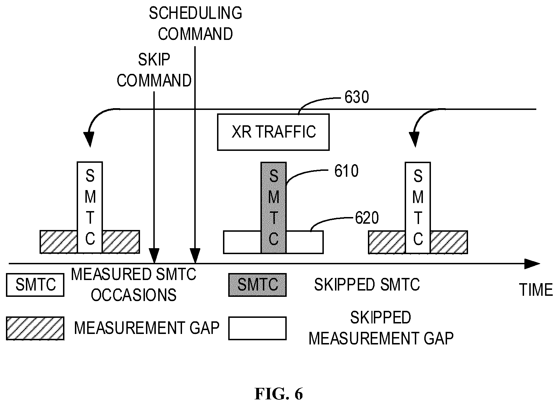

Reference is now made to FIG. 6, which shows an example of measurement skipping in accordance with some example embodiments of the present disclosure. In the description of FIG. 6, the XR traffic is taken as an example for the traffic with a data type having a specific latency requirement.

In some example embodiments, behaviors of the second apparatus 120 and first apparatus 110 are based on the assumption that serving cell and intra-frequency measurements can be performed during XR traffic without measurement gaps and without scheduling restrictions, whilst inter-frequency measurements, throughout this application to be understood to include inter-RAT measurements, for e.g. measuring 4G/LTE carriers, requiring measurement gaps, are distinguished for two subsets, i.e. inter-frequency measurements are prioritized for certain frequencies (i.e., MOs) over other frequencies, which is done by the first apparatus 110 autonomously rather than by the signaling of the second apparatus 120.

As described above, as an option, the best effort RRM measurement configuration may be transmitted from the second apparatus 120 to the first apparatus 110 via an RRC signaling. As another option, at least partial parameters/information of the best effort RRM measurement configuration may be transmitted from the second apparatus 120 to the first apparatus 110 via DCI or MAC-CE.

In a case where the second apparatus 120 initially configures the first apparatus 110 to apply best effort RRM measurements via the RRC signaling, the first apparatus 110 may first measure all inter-frequency carriers and if the received signal quality, for at least one inter-frequency cell on that carrier is above a predefined threshold, the first apparatus 110 may assign the carrier to the first subset of inter-frequency carriers, otherwise to the second subset of inter-frequency carriers and then performs only serving cell and intra-frequency measurements and the first subset of inter-frequency measurements during the XR traffic. For the carriers with received signal quality below the threshold (or a threshold related to a similar measurement type) in the second subset, these may be measured only if requirements for serving cell and intra-frequency measurements and selected inter-frequency measurements in the first subset are all satisfied.

In a case where the second apparatus 120 indicates to the first apparatus 110 via a DCI command (e.g. as part of the skip command or a separate command) or via a MAC-CE signaling whether or not to apply best effort RRM measurements for a pre-configured time period (time interval), the first apparatus 110 may first measure all inter-frequency carriers and if the received signal quality, for at least one inter-frequency cell on that carrier is above a predefined threshold, assign the carrier to the first subset of inter-frequency carriers, otherwise to the second subset of inter-frequency carriers and then performs only serving cell and intra-frequency measurements and first subset of inter-frequency measurements during XR traffic. For the carriers with received signal quality below the threshold (or a threshold related to a similar measurement type) in the second subset, these may be measured only if requirements for serving cell and intra-frequency measurements and selected inter-frequency measurements in the first subset are all satisfied.

As shown in FIG. 6, based on the solution described above, measurements on an inter-frequency carrier, e.g., a SMTC occasion 610 can be skipped and therefore the time window/gap 620 associated with the SMTC occasion 610 are unoccupied for measurement. The data scheduling/transmission for XR traffic 630 can be performed on the time window/gap 620 without interruption.

For both cases, the inter-frequency carrier selection/prioritization may be reset after a configured time interval in order to take into account the mobility aspect and there upon a new carrier selection/prioritization is done for all configured inter-frequency carriers.

Based on this solution of the present disclosure, the delay of the measurement reporting may be reduced since measurements that are more relevant for mobility purposes are prioritized over less relevant measurements. Thus, measurement reporting delay can be reduced versus existing solutions assuming measurements for all configured measurement objects would need to be reported.

Furthermore, actual mobility conditions can be better taken into account based on the solution of the present disclosure, as frequencies with low received power, or similar measurement type, are excluded from RRM measurements for a certain time period.

Finally, adaptation of RRM measurements can also be controlled by the network with dedicated signaling to activate or deactivate the best-effort RRM measurement behavior.

In some embodiments, some UE behaviors may balance the conflict between requested RRM measurements requiring a periodic measurement gap pattern and the guaranteed throughput and latency performance for XR traffic data.

For example, in a case where the RRM measurement is performing by the first apparatus 110 for the intra-frequency carrier and a serving cell carrier of the apparatus and at least one inter-frequency carrier, if the first apparatus 110 determines that an amount of traffic with a data type having a specific latency requirement is increased up to a threshold amount, the first apparatus 110 may skip the RRM measurements for the at least one inter-frequency carrier on one or more measurement gaps.

As another example, if the first apparatus 110 determines that a packet loss rate associated with the traffic is increased up to a threshold rate, the first apparatus 110 may skip the RRM measurements for the at least one inter-frequency carrier on one or more measurement gaps.

In this case, the transmission of the traffic between the first apparatus 110 and the second apparatus 120 may be performed within the one or more measurement gaps, on which the inter-frequency measurements are skipped. Therefore, the data transmission may be performed without interruption.

In addition, the first apparatus 110 may measure received signal qualities associated with a plurality of inter-frequency carriers and if a received signal quality for respective at least one target cell on one or more inter-frequency carriers in a plurality of inter-frequency carriers satisfies a threshold quality or a combination of threshold qualities for a pre-determined time interval, the first apparatus 110 may start to perform the RRM measurement on the one or more inter-frequency carriers.

Upon performing the RRM measurements on the one or more inter-frequency carriers, the intra-frequency carrier and the serving cell carrier of the first apparatus 110, if the first apparatus 110 determines the one or more inter-frequency carriers, the intra-frequency carrier and the serving cell carrier satisfy pre-determined radio condition requirements, such that e.g. a pre-defined measurement frequency in a predefined time interval is satisfied for them, the first apparatus 110 may perform the RRM measurement on other inter-frequency carriers in a plurality of inter-frequency carriers.

It is to be understood that some actions described with reference to FIG. 5 and FIG. 6 may also be applied for this situation, which may be omitted here.

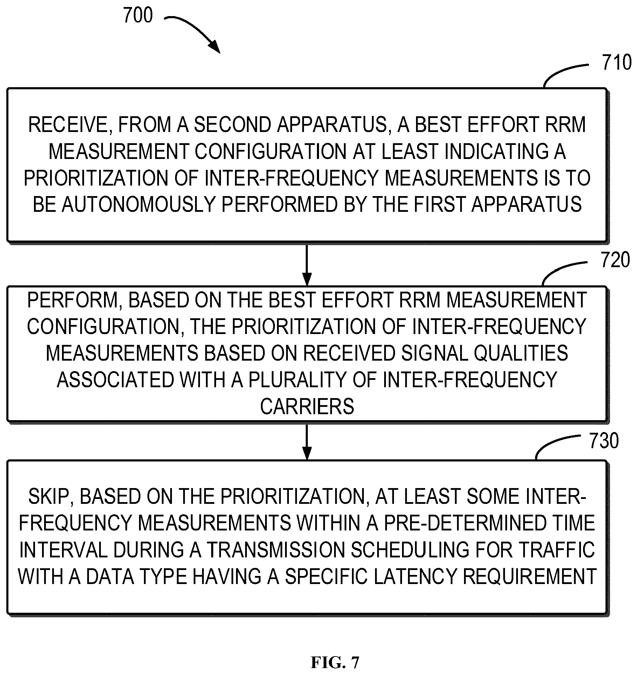

FIG. 7 shows a flowchart of an example method 700 implemented at a first apparatus in accordance with some example embodiments of the present disclosure. For the purpose of discussion, the method 700 will be described from the perspective of the first apparatus 110 in FIG. 1.

At block 710, the first apparatus receives, from a second apparatus, a best effort RRM measurement configuration at least indicating a prioritization of inter-frequency measurements is to be autonomously performed by the first apparatus.

At block 720, the first apparatus performs, based on the best effort RRM measurement configuration, the prioritization of inter-frequency measurements based on received signal qualities associated with a plurality of inter-frequency carriers.

At block 730, the first apparatus skips, based on the prioritization, at least some inter-frequency measurements within a pre-determined time interval during a transmission scheduling for traffic with a data type having a specific latency requirement.

In some example embodiments, the method 700 further comprises: in accordance with a determination, that a received signal quality for respective at least one target cell on one or more inter-frequency carriers in the plurality of inter-frequency carriers satisfies a threshold quality or a combination of threshold qualities, skip RRM measurements for inter-frequency carriers in the plurality of inter-frequency carriers other than the one or more inter-frequency carriers, where the respective at least one target cell satisfies the threshold quality.

In some example embodiments, the method 700 further comprises: performing RRM measurements for the one or more inter-frequency carriers, the intra-frequency carrier and a serving cell carrier of the first apparatus within the pre-determined time interval.

In some example embodiments, the received signal quality is derived from a synchronization signal reference signal received power, SS-RSRP, or a synchronization signal reference signal received quality, SS-RSRQ, or a synchronization signal signal-to-interference ratio, SS-SINR, or from a channel-state information reference symbol, CSI-RS, based measurement.

In some example embodiments, the method 700 further comprises: receiving, from the second apparatus via a radio resource control, RRC, signaling, the best effort RRM measurement configuration indicating best effort RRM measurements are to be applied by the first apparatus; and determining, based on the best effort RRM measurement configuration, the received signal qualities associated with the plurality of inter-frequency carriers by measuring the plurality of inter-frequency carriers.

In some example embodiments, the method 700 further comprises: receiving, from the second apparatus via a downlink control information, DCI, or a medium access control, MAC, control element, CE, at least a part of the best effort RRM measurement configuration and/or at least an indication whether best effort RRM measurements are to be applied by the first apparatus; and in accordance with a determination that the best effort RRM measurements are to be applied by the first apparatus, determining based on the indication, the received signal qualities associated with the plurality of inter-frequency carriers by measuring the plurality of inter-frequency carriers.

In some example embodiments, the best effort RRM measurement configuration comprises the threshold quality and the pre-determined time interval.

In some example embodiments, the method 700 further comprises: in accordance with a determination, based on the RRM measurements, that the one or more inter-frequency carriers, for which at least one target cell satisfies the threshold quality, the intra-frequency carrier and the serving cell carrier of the first apparatus satisfy pre-determined radio condition requirements, such that e.g. a pre-defined measurement frequency in a predefined time interval is satisfied for them, perform further RRM measurements for one or more inter-frequency carriers in the plurality of inter-frequency carriers other than those inter-frequency carriers, where at least one target cell satisfies the threshold quality, within a pre-determined time interval.

In some example embodiments, the method 700 further comprises: in accordance with a determination that the pre-determined time interval expires, determining that the prioritization is invalid; and performing a further prioritization of inter-frequency measurements based on new measured received signal qualities associated with the plurality of inter-frequency carriers; and reselecting, from the plurality of inter-frequency carriers, those inter-frequency carriers, where at least one target cell satisfies the threshold quality, for further RRM measurements based on the further prioritization.

In some example embodiments, the method 700 further comprises: reporting, to the second apparatus, a capability for supporting best effort RRM measurements for the traffic with the specific data type.

In some example embodiments, the traffic with the specific data type comprises traffic having the latency requirement that is lower than a threshold level.

In some example embodiments, the first apparatus comprises a terminal device and the second apparatus comprises a network device.

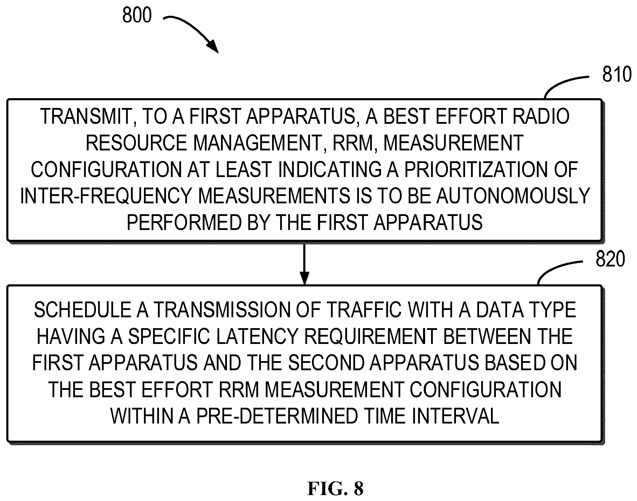

FIG. 8 shows a flowchart of an example method 800 implemented at a second apparatus in accordance with some example embodiments of the present disclosure. For the purpose of discussion, the method 800 will be described from the perspective of the second apparatus 120 in FIG. 1.

At block 810, the second apparatus transmits, to a first apparatus, a best effort RRM measurement configuration at least indicating a prioritization of inter-frequency measurements is to be autonomously performed by the first apparatus.

At block 820, the second apparatus schedules a transmission of traffic with a data type having a specific latency requirement between the first apparatus and the second apparatus based on the best effort RRM measurement configuration within a pre-determined time interval.

In some example embodiments, the method 800 further comprises: transmitting, to the first apparatus via a radio resource control, RRC, signaling, the best effort RRM measurement configuration indicating best effort RRM measurements are to be applied by the first apparatus.

In some example embodiments, the method 800 further comprises: transmitting, to the first apparatus via a downlink control information, DCI, or a medium access control, MAC, control element, CE, at least a part of the best effort RRM measurement configuration and/or at least an indication whether best effort RRM measurements are to be applied by the first apparatus.

In some example embodiments, the best effort RRM measurement configuration comprises the threshold quality or a combination of threshold qualities and the pre-determined time interval.

In some example embodiments, the received signal quality is derived from a synchronization signal reference signal received power, SS-RSRP, or a synchronization signal reference signal received quality, SS-RSRQ, or a synchronization signal signal-to-interference ratio, SS-SINR, or from a channel-state information reference symbol, CSI-RS, based measurement.

In some example embodiments, the traffic with the specific data type comprises traffic having the latency requirement that is lower than a threshold level.

In some example embodiments, the first apparatus comprises a terminal device and the second apparatus comprises a network device.

In some example embodiments, the reported capability for supporting best effort RRM measurements for the traffic with the specific data type by the first apparatus is accounted for in the processing by the second apparatus.

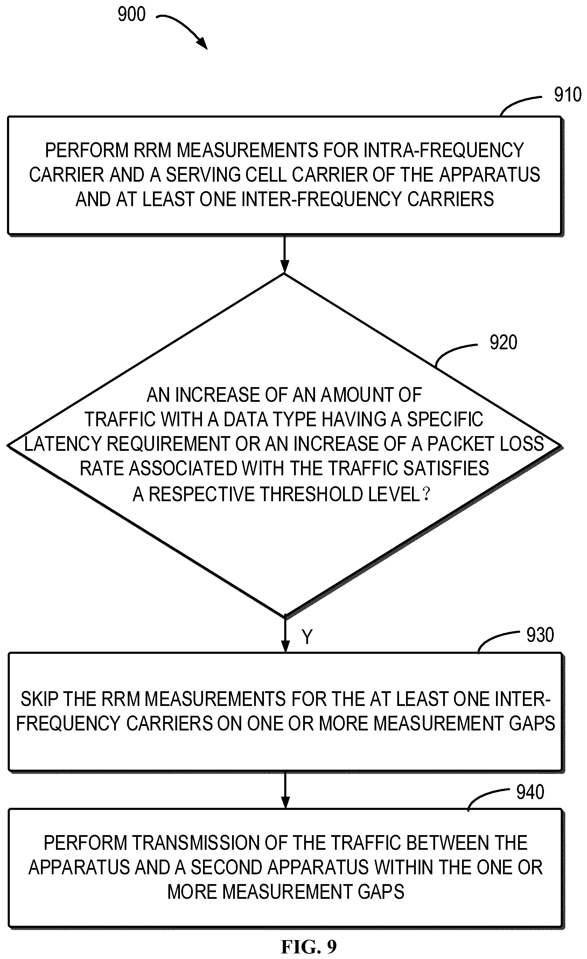

FIG. 9 shows a flowchart of an example method 900 implemented at an apparatus in accordance with some example embodiments of the present disclosure. For the purpose of discussion, the method 900 will be described from the perspective of the first apparatus 110 in FIG. 1.

At block 910, the first apparatus performs RRM measurements for intra-frequency carrier and a serving cell carrier of the apparatus and at least one inter-frequency carrier.

At block 920, if an increase of an amount of traffic with a data type having a specific latency requirement, or an increase of a packet loss rate associated with the traffic satisfies a respective threshold level, at block 930, the first apparatus skips the RRM measurements for the at least one inter-frequency carrier on one or more measurement gaps.

At block 940, the first apparatus performs transmission of the traffic between the apparatus and a second apparatus within the one or more measurement gaps.

In some example embodiments, the method 900 further comprises: measuring received signal qualities associated with a plurality of inter-frequency carriers; and in accordance with a determination that a received signal quality for respective at least one target cell on one or more inter-frequency carriers in plurality of inter-frequency carriers satisfies a threshold quality or a combination of threshold qualities for a pre-determined time interval, selecting the one or more inter-frequency carriers for the RRM measurement.

In some example embodiments, the method 900 further comprises: in accordance with a determination, based on the RRM measurements, that the one or more inter-frequency carriers, the intra-frequency carrier and a serving cell carrier of the first apparatus satisfy pre-determined radio condition requirements, such that e.g. a pre-defined measurement frequency in a predefined time interval is satisfied for them, performing further RRM measurements for inter-frequency carriers in the plurality of inter-frequency carriers other than the one or more inter-frequency carriers.

In some example embodiments, the method 900 further comprises: receiving, from the second apparatus, a best effort RRM measurement configuration at least indicating a prioritization of inter-frequency measurements is to be autonomously performed by the first apparatus; and performing, based on the best effort RRM measurement configuration, the prioritization of inter-frequency measurements based on the received signal qualities associated with the plurality of inter-frequency carriers.

In some example embodiments, the best effort RRM measurement configuration comprises the threshold quality and the pre-determined time interval.

In some example embodiments, the received signal quality is derived from a synchronization signal reference signal received power, SS-RSRP, or a synchronization signal reference signal received quality, SS-RSRQ, or a synchronization signal signal-to-interference ratio, SS-SINR, or from a channel-state information reference symbol, CSI-RS, based measurement.

In some example embodiments, the method 900 further comprises: receiving, from the second apparatus via a radio resource control, RRC, signaling, the best effort RRM measurement configuration indicating best effort RRM measurements are to be applied by the first apparatus.

In some example embodiments, the method 900 further comprises: receiving, from the second apparatus via a downlink control information, DCI, or a medium access control, MAC, control element, CE, at least a part of the best effort RRM measurement configuration and/or at least an indication whether best effort RRM measurements are to be applied by the first apparatus.

In some example embodiments, the method 900 further comprises: reporting, to the second apparatus, a capability for supporting best effort RRM measurements for the traffic with the specific data type.

In some example embodiments, the method 900 further comprises: in accordance with a determination that a threshold related to a measurement type is satisfied for a pre-determined time interval, selecting the one or more inter-frequency carriers corresponding to the measurement type for the RRM measurement.

In some example embodiments, the threshold related to the measurement type and the pre-determined time interval are pre-configured or configured by the second apparatus.

In some example embodiments, the traffic with the data type comprises traffic having the specific latency requirement that is lower than a threshold level.

In some example embodiments, the apparatus is a terminal device.

In some example embodiments, a first apparatus capable of performing any of the method 700 (for example, the first apparatus 110 in FIG. 1) may comprise means for performing the respective operations of the method 700. The means may be implemented in any suitable form. For example, the means may be implemented in a circuitry or software module. The first apparatus may be implemented as or included in the first apparatus 110 in FIG. 1.

In some example embodiments, the first apparatus comprises means for receiving, from a second apparatus, a best effort RRM measurement configuration at least indicating a prioritization of inter-frequency measurements is to be autonomously performed by the first apparatus; means for performing, based on the best effort RRM measurement configuration, the prioritization of inter-frequency measurements based on received signal qualities associated with a plurality of inter-frequency carriers; and means for skipping, based on the prioritization, at least some inter-frequency measurements within a pre-determined time interval during a transmission scheduling for traffic with a data type having a specific latency requirement.

In some example embodiments, the first apparatus further comprises: means for in accordance with a determination, skipping on the prioritization, that a received signal quality for respective at least one target cell on one or more inter-frequency carriers in the plurality of inter-frequency carriers satisfies a threshold quality or a combination of threshold qualities, skip RRM measurements for inter-frequency carriers in the plurality of inter-frequency carriers other than the one or more inter-frequency carriers, where the respective at least one target cell satisfies the threshold quality.

In some example embodiments, the first apparatus further comprises: means for performing RRM measurements for the one or more inter-frequency carriers, the intra-frequency carrier and a serving cell carrier of the first apparatus within the pre-determined time interval.

In some example embodiments, the received signal quality is derived from a synchronization signal reference signal received power, SS-RSRP, or a synchronization signal reference signal received quality, SS-RSRQ, or a synchronization signal signal-to-interference ratio, SS-SINR, or from a channel-state information reference symbol, CSI-RS, based measurement.

In some example embodiments, the first apparatus further comprises: means for receiving, from the second apparatus via a radio resource control, RRC, signaling, the best effort RRM measurement configuration indicating best effort RRM measurements are to be applied by the first apparatus; and means for determining, based on the best effort RRM measurement configuration, the received signal qualities associated with the plurality of inter-frequency carriers by measuring the plurality of inter-frequency carriers.

In some example embodiments, the first apparatus further comprises: means for receiving, from the second apparatus via a downlink control information, DCI, or a medium access control, MAC, control element, CE, at least a part of the best effort RRM measurement configuration and/or at least an indication whether best effort RRM measurements are to be applied by the first apparatus; and means for, in accordance with a determination that the best effort RRM measurements are to be applied by the first apparatus, determining based on the indication, the received signal qualities associated with the plurality of inter-frequency carriers by measuring the plurality of inter-frequency carriers.

In some example embodiments, the best effort RRM measurement configuration comprises the threshold quality and the pre-determined time interval.

In some example embodiments, the first apparatus further comprises: means for in accordance with a determination, based on the RRM measurements, that the one or more inter-frequency carriers, for which at least one target cell satisfies the threshold quality, the intra-frequency carrier and the serving cell carrier of the first apparatus satisfy pre-determined radio condition requirements, such that e.g. a pre-defined measurement frequency in a predefined time interval is satisfied for them, perform further RRM measurements for one or more inter-frequency carriers in the plurality of inter-frequency carriers other than those inter-frequency carriers, where at least one target cell satisfies the threshold quality, within a pre-determined time interval.

In some example embodiments, the first apparatus further comprises: means for in accordance with a determination that the pre-determined time interval expires, determining that the prioritization is invalid; and means for performing a further prioritization of inter-frequency measurements based on new measured received signal qualities associated with the plurality of inter-frequency carriers; and means for reselecting, from the plurality of inter-frequency carriers, those inter-frequency carriers, where at least one target cell satisfies the threshold quality, for further RRM measurements based on the further prioritization.

In some example embodiments, the first apparatus further comprises: means for reporting, to the second apparatus, a capability for supporting best effort RRM measurements for the traffic with the specific data type.

In some example embodiments, the traffic with the specific data type comprises traffic having the latency requirement that is lower than a threshold level.

In some example embodiments, the first apparatus comprises a terminal device and the second apparatus comprises a network device.

In some example embodiments, a second apparatus capable of performing any of the method 800 (for example, the second apparatus 120 in FIG. 1) may comprise means for performing the respective operations of the method 800. The means may be implemented in any suitable form. For example, the means may be implemented in a circuitry or software module. The second apparatus may be implemented as or included in the second apparatus 120 in FIG. 1.

In some example embodiments, the second apparatus comprises means for transmitting, to a first apparatus, a best effort RRM measurement configuration at least indicating a prioritization of inter-frequency measurements is to be autonomously performed by the first apparatus; and means for scheduling a transmission of traffic with a data type having a specific latency requirement between the first apparatus and the second apparatus based on the best effort RRM measurement configuration within a pre-determined time interval.

In some example embodiments, the second apparatus further comprises: means for transmitting, to the first apparatus via a radio resource control, RRC, signaling, the best effort RRM measurement configuration indicating best effort RRM measurements are to be applied by the first apparatus.

In some example embodiments, the second apparatus further comprises: means for transmitting, to the first apparatus via a downlink control information, DCI, or a medium access control, MAC, control element, CE, at least a part of the best effort RRM measurement configuration and/or at least an indication whether best effort RRM measurements are to be applied by the first apparatus.

In some example embodiments, the best effort RRM measurement configuration comprises the threshold quality or a combination of threshold qualities and the pre-determined time interval.

In some example embodiments, the received signal quality is derived from a synchronization signal reference signal received power, SS-RSRP, or a synchronization signal reference signal received quality, SS-RSRQ, or a synchronization signal signal-to-interference ratio, SS-SINR, or from a channel-state information reference symbol, CSI-RS, based measurement.

In some example embodiments, the traffic with the specific data type comprises traffic having the latency requirement that is lower than a threshold level.

In some example embodiments, the first apparatus comprises a terminal device and the second apparatus comprises a network device.

In some example embodiments, the reported capability for supporting best effort RRM measurements for the traffic with the specific data type by the first apparatus is accounted for in the processing by the second apparatus.

In some example embodiments, an apparatus capable of performing any of the method 900 (for example, the first apparatus 110 in FIG. 1) may comprise means for performing the respective operations of the method 900. The means may be implemented in any suitable form. For example, the means may be implemented in a circuitry or software module. The first apparatus may be implemented as or included in the first apparatus 110 in FIG. 1.

In some example embodiments, the apparatus comprises means for performing RRM measurements for the intra-frequency carrier and a serving cell carrier of the apparatus and at least one inter-frequency carriers; and means for in accordance with a determination that an increase of an amount of traffic with a data type having a specific latency requirement, or an increase of a packet loss rate associated with the traffic satisfies a respective threshold level, skip the RRM measurements for the at least one inter-frequency carriers on one or more measurement gaps; and means for performing transmission of the traffic between the apparatus and a second apparatus within the one or more measurement gaps.

In some example embodiments, the apparatus comprises means for measuring received signal qualities associated with a plurality of inter-frequency carriers; and means for, in accordance with a determination that a received signal quality for respective at least one target cell on one or more inter-frequency carriers in plurality of inter-frequency carriers satisfy a threshold quality or a combination of threshold qualities for a pre-determined time interval, selecting the one or more inter-frequency carriers for the RRM measurements.

In some example embodiments, the apparatus comprises means for, in accordance with a determination, based on the RRM measurements, that the one or more inter-frequency carriers, the intra-frequency carrier and a serving cell carrier of the first apparatus satisfy pre-determined radio condition requirements, such that e.g. a pre-defined measurement frequency in a predefined time interval is satisfied for them, performing further RRM measurements for inter-frequency carriers in the plurality of inter-frequency carriers other than the one or more inter-frequency carriers.

In some example embodiments, the apparatus comprises means for receiving, from the second apparatus, a best effort RRM measurement configuration at least indicating a prioritization of inter-frequency measurements is to be autonomously performed by the first apparatus; and means for performing, based on the best effort RRM measurement configuration, the prioritization of inter-frequency measurements based on the received signal qualities associated with the plurality of inter-frequency carriers.

In some example embodiments, the best effort RRM measurement configuration comprises the threshold quality and the pre-determined time interval.

In some example embodiments, the received signal quality is derived from a synchronization signal reference signal received power, SS-RSRP, or a synchronization signal reference signal received quality, SS-RSRQ, or a synchronization signal signal-to-interference ratio, SS-SINR, or from a channel-state information reference symbol, CSI-RS, based measurement.

In some example embodiments, the apparatus comprises means for receiving, from the second apparatus via a radio resource control, RRC, signaling, the best effort RRM measurement configuration indicating best effort RRM measurements are to be applied by the first apparatus.

In some example embodiments, the apparatus comprises means for receiving, from the second apparatus via a downlink control information, DCI, or a medium access control, MAC, control element, CE, at least a part of the best effort RRM measurement configuration and/or at least an indication whether best effort RRM measurements are to be applied by the first apparatus.

In some example embodiments, the apparatus comprises means for reporting, to the second apparatus, a capability for supporting best effort RRM measurements for the traffic with the specific data type.

In some example embodiments, the apparatus comprises means for, in accordance with a determination that a threshold related to a measurement type is satisfied for a pre-determined time interval, selecting the one or more inter-frequency carriers corresponding to the measurement type for the RRM measurement.

In some example embodiments, the threshold related to the measurement type and the pre-determined time interval are pre-configured or configured by the second apparatus.

In some example embodiments, the traffic with the specific data type comprises traffic having the specific latency requirement that is lower than a threshold level.

In some example embodiments, the apparatus is a terminal device.

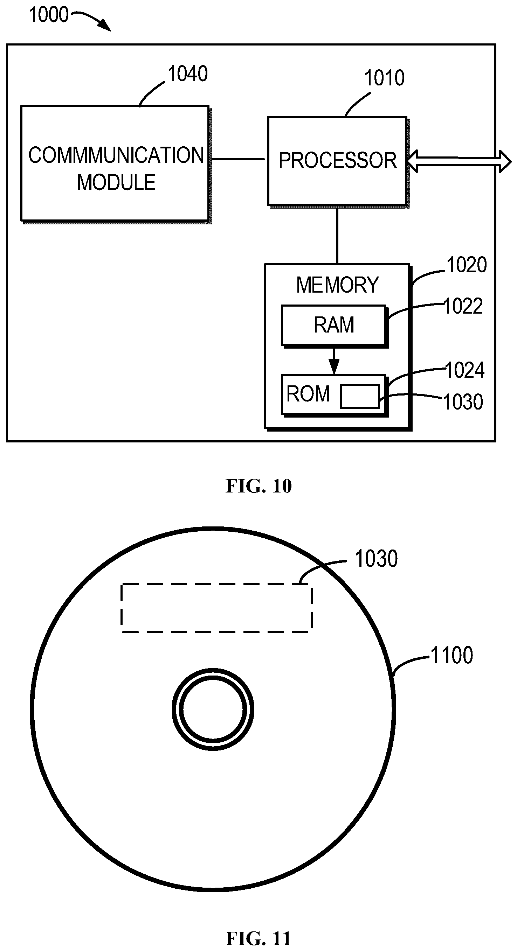

FIG. 10 is a simplified block diagram of a device 1000 that is suitable for implementing example embodiments of the present disclosure. The device 1000 may be provided to implement a communication device, for example, the first apparatus 110 or the second apparatus 120 as shown in FIG. 1. As shown, the device 1000 includes one or more processors 1010, one or more memories 1020 coupled to the processor 1010, and one or more communication modules 1040 coupled to the processor 1010.

The communication module 1040 is for bidirectional communications. The communication module 1040 has one or more communication interfaces to facilitate communication with one or more other modules or devices. The communication interfaces may represent any interface that is necessary for communication with other network elements. In some example embodiments, the communication module 1040 may include at least one antenna.

The processor 1010 may be of any type suitable to the local technical network and may include one or more of the following: general purpose computers, special purpose computers, microprocessors, digital signal processors (DSPs) and processors based on multicore processor architecture, as non-limiting examples. The device 1000 may have multiple processors, such as an application specific integrated circuit chip that is slaved in time to a clock which synchronizes the main processor.

The memory 1020 may include one or more non-volatile memories and one or more volatile memories. Examples of the non-volatile memories include, but are not limited to, a Read Only Memory (ROM) 1024, an electrically programmable read only memory (EPROM), a flash memory, a hard disk, a compact disc (CD), a digital video disk (DVD), an optical disk, a laser disk, and other magnetic storage and/or optical storage. Examples of the volatile memories include, but are not limited to, a random-access memory (RAM) 1022 and other volatile memories that will not last in the power-down duration.

A computer program 1030 includes computer executable instructions that are executed by the associated processor 1010. The instructions of the program 1030 may include instructions for performing operations/acts of some example embodiments of the present disclosure. The program 1030 may be stored in the memory, e.g., the ROM 1024. The processor 1010 may perform any suitable actions and processing by loading the program 1030 into the RAM 1022.

The example embodiments of the present disclosure may be implemented by means of the program 1030 so that the device 1000 may perform any process of the disclosure as discussed with reference to FIG. 2 to FIG. 9. The example embodiments of the present disclosure may also be implemented by hardware or by a combination of software and hardware.

In some example embodiments, the program 1030 may be tangibly contained in a computer readable medium which may be included in the device 1000 (such as in the memory 1020) or other storage devices that are accessible by the device 1000. The device 1000 may load the program 1030 from the computer readable medium to the RAM 1022 for execution. In some example embodiments, the computer readable medium may include any types of non-transitory storage medium, such as ROM, EPROM, a flash memory, a hard disk, CD, DVD, and the like. The term "non-transitory," as used herein, is a limitation of the medium itself (i.e., tangible, not a signal) as opposed to a limitation on data storage persistency (e.g., RAM vs. ROM).

FIG. 11 shows an example of the computer readable medium 1100 which may be in form of CD, DVD or other optical storage disk. The computer readable medium 1100 has the program 1030 stored thereon.

Generally, various embodiments of the present disclosure may be implemented in hardware or special purpose circuits, software, logic or any combination thereof. Some aspects may be implemented in hardware, and other aspects may be implemented in firmware or software which may be executed by a controller, microprocessor or other computing device. Although various aspects of embodiments of the present disclosure are illustrated and described as block diagrams, flowcharts, or using some other pictorial representations, it is to be understood that the block, apparatus, system, technique or method described herein may be implemented in, as non-limiting examples, hardware, software, firmware, special purpose circuits or logic, general purpose hardware or controller or other computing devices, or some combination thereof.

Some example embodiments of the present disclosure also provide at least one computer program product tangibly stored on a computer readable medium, such as a non-transitory computer readable medium. The computer program product includes computer-executable instructions, such as those included in program modules, being executed in a device on a target physical or virtual processor, to carry out any of the methods as described above. Generally, program modules include routines, programs, libraries, objects, classes, components, data structures, or the like that perform particular tasks or implement particular abstract data types. The functionality of the program modules may be combined or split between program modules as desired in various embodiments. Machine-executable instructions for program modules may be executed within a local or distributed device. In a distributed device, program modules may be located in both local and remote storage media.

Program code for carrying out methods of the present disclosure may be written in any combination of one or more programming languages. The program code may be provided to a processor or controller of a general-purpose computer, special purpose computer, or other programmable data processing apparatus, such that the program code, when executed by the processor or controller, cause the functions/operations specified in the flowcharts and/or block diagrams to be implemented. The program code may execute entirely on a machine, partly on the machine, as a stand-alone software package, partly on the machine and partly on a remote machine or entirely on the remote machine or server.

In the context of the present disclosure, the computer program code or related data may be carried by any suitable carrier to enable the device, apparatus or processor to perform various processes and operations as described above. Examples of the carrier include a signal, computer readable medium, and the like.

The computer readable medium may be a computer readable signal medium or a computer readable storage medium. A computer readable medium may include but not limited to an electronic, magnetic, optical, electromagnetic, infrared, or semiconductor system, apparatus, or device, or any suitable combination of the foregoing. More specific examples of the computer readable storage medium would include an electrical connection having one or more wires, a portable computer diskette, a hard disk, a random-access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing.

Further, although operations are depicted in a particular order, this should not be understood as requiring that such operations be performed in the particular order shown or in sequential order, or that all illustrated operations be performed, to achieve desirable results. In certain circumstances, multitasking and parallel processing may be advantageous. Likewise, although several specific implementation details are contained in the above discussions, these should not be construed as limitations on the scope of the present disclosure, but rather as descriptions of features that may be specific to particular embodiments. Unless explicitly stated, certain features that are described in the context of separate embodiments may also be implemented in combination in a single embodiment. Conversely, unless explicitly stated, various features that are described in the context of a single embodiment may also be implemented in a plurality of embodiments separately or in any suitable sub-combination.

Although the present disclosure has been described in languages specific to structural features and/or methodological acts, it is to be understood that the present disclosure defined in the appended claims is not necessarily limited to the specific features or acts described above. Rather, the specific features and acts described above are disclosed as example forms of implementing the claims.

## Claims

1. An apparatus comprising:
at least one processor; and
at least one memory storing instructions that, when executed by the at least one processor, cause the apparatus at least to:
perform radio resource management, RRM, measurements for intra-frequency carrier and a serving cell carrier of the apparatus and at least one inter-frequency carriers;
in accordance with a determination that an increase of an amount of traffic with a data type having a specific latency requirement, or an increase of a packet loss rate associated with the traffic satisfies a respective threshold level, skip the RRM measurements for the at least one inter-frequency carriers on one or more measurement gaps; and
perform transmission of the traffic between the apparatus and a second apparatus within the one or more measurement gaps.

2. The first apparatus of claim 1, wherein the apparatus is configured to:
measure received signal qualities associated with a plurality of inter-frequency carriers; and
in accordance with a determination that a received signal quality for respective at least one target cell on one or more inter-frequency carriers in plurality of inter-frequency carriers satisfy a threshold quality or a combination of threshold qualities for a pre-determined time interval, select the one or more inter-frequency carriers for the RRM measurement.

3. The apparatus of claim 2, wherein the apparatus is configured to:
in accordance with a determination, based on the RRM measurements, that the one or more inter-frequency carriers, an intra-frequency carrier and a serving cell carrier of the first apparatus satisfy a pre-determined radio condition, perform further RRM measurements for inter-frequency carriers in the plurality of inter-frequency carriers other than the one or more inter-frequency carriers.

4. The apparatus of claim 2, wherein the apparatus is configured to:
receive, from the second apparatus, a best effort radio resource management, RRM, measurement configuration at least indicating a prioritization of inter-frequency measurements is to be autonomously performed by the first apparatus; and
perform, based on the best effort RRM measurement configuration, the prioritization of inter-frequency measurements based on the received signal qualities associated with the plurality of inter-frequency carriers.

5. The apparatus of claim 4, wherein the best effort RRM measurement configuration comprises the threshold quality and the pre-determined time interval.

6. The apparatus of any of claims 2-5, wherein the received signal quality is derived from a synchronization signal reference signal received power, SS-RSRP, or a synchronization signal reference signal received quality, SS-RSRQ, or a synchronization signal signal-to-interference ratio, SS-SINR, or from a channel-state information reference symbol, CSI-RS, based measurement.

7. The apparatus of claim 4, wherein the apparatus is configured to:
receive, from the second apparatus via a radio resource control, RRC, signaling, the best effort RRM measurement configuration indicating best effort RRM measurements are to be applied by the first apparatus.

8. The apparatus of claim 4, wherein the apparatus is configured to:
receive, from the second apparatus via a downlink control information, DCI, or a medium access control, MAC, control element, CE, at least a part of the best effort RRM measurement configuration and/or at least an indication whether best effort RRM measurements are to be applied by the first apparatus.

9. The apparatus of any of claims 1-8, wherein the apparatus is configured to:
report, to the second apparatus, a capability for supporting best effort RRM measurements for the traffic with the specific data type.

10. The apparatus of claim 1, wherein the apparatus is configured to:
in accordance with a determination that a threshold related to a measurement type is satisfied for a pre-determined time interval, select the one or more inter-frequency carriers corresponding to the measurement type for the RRM measurement.

11. The apparatus of any of claims 1-10, wherein the traffic with the data type comprises traffic having the specific latency requirement that is lower than a threshold level.

12. The apparatus of any of claims 1-11, wherein the apparatus is a terminal device.

13. A method comprising:
performing radio resource management, RRM, measurements for intra-frequency carrier and a serving cell carrier of the apparatus and at least one inter-frequency carriers. and
in accordance with a determination that an increase of an amount of traffic with a data type having a specific latency requirement, or an increase of a packet loss rate associated with the traffic satisfies a respective threshold level, skip the RRM measurements for the at least one inter-frequency carriers on one or more measurement gaps.
performing transmission of the traffic between the apparatus and a second apparatus within the one or more measurement gaps.

14. An apparatus comprising:
means for performing radio resource management, RRM, measurements for intra-frequency carrier and a serving cell carrier of the apparatus and at least one inter-frequency carriers; and
means for in accordance with a determination that an increase of an amount of traffic with a data type having a specific latency requirement, or an increase of a packet loss rate associated with the traffic satisfies a respective threshold level, skip the RRM measurements for the at least one inter-frequency carriers on one or more measurement gaps; and
means for performing transmission of the traffic between the apparatus and a second apparatus within the one or more measurement gaps.

15. A computer readable medium comprising instructions stored thereon for causing an apparatus at least to perform the method of claim 13.
